# EUROPEAN PATENT SPECIFICATION

(11) **EP 3 906 445 B1**
(45) Date of publication and mention of the grant of the patent: **18.11.2026**
(21) Application number: 19839674.9
(22) Date of filing: 20.12.2019
(51) Int. Cl.: G05B 19/042

(54) **METHOD AND SYSTEM TO GENERATE CONTROL LOGIC FOR PERFORMING INDUSTRIAL PROCESSES**
VERFAHREN UND SYSTEM ZUR ERZEUGUNG EINER STEUERLOGIK ZUR DURCHFÜHRUNG VON INDUSTRIELLEN PROZESSEN
PROCÉDÉ ET SYSTÈME DESTINÉS À GÉNÉRER UNE LOGIQUE DE COMMANDE PERMETTANT D'EFFECTUER DES PROCESSUS INDUSTRIELS

(30) Priority: 31.12.2018 IN 201841049905
(43) Date of publication of application: 10.11.2021
(73) Proprietor: ABB Schweiz AG, 5400 Baden (CH)
(72) Inventor: JETLEY, Raoul, Mahadevapura, Bangalore 560048 (IN); SHARMA, Divyasheel, Mahadevapura Post, Bangalore 560048 (IN); PEEDIKAYIL, Abdulla Puthan, Thalassery, Kerala 670676 (IN); SCHULZ, Dirk, 67149 Meckenheim (DE); RAMU, Vadthyavath, Hopefarm, Bengaluru 560067 (IN)
(74) Representative: Zimmermann & Partner Patentanwälte mbB
(86) International application number: PCT/IB2019/061178
(87) International publication number: WO 2020/141394

(56) References cited:
- US-A1- 2013 185 050
- US-A1- 2016 314 106
- US-A1- 2017 293 276
- US-A1- 2018 096 108

## Description

### FIELD OF THE INVENTION

The present invention relates generally to control systems in an industrial process plant. More particularly, the present invention relates to methods and systems for generating control logic for control systems to perform industrial processes.

### BACKGROUND OF THE INVENTION

Monitoring and control of various industrial processes in a process plant are automated by use of control systems. In order to automate an industrial process, a control system (e.g., a programmable logic controller, PID controller, or a distributed control system) associated with the industrial process needs to be programmed based on requirements of the industrial process. Generally, control systems are programmed using control logic to control and monitor the industrial process. Typically, requirements are synthesized by the customers or Engineering, Procurement and Construction (EPC) contractors and provided in some formal or semi-formal representation, including, for example, input/output tag lists, piping and instrumentation diagrams (P&ID), and control narratives.

Input/output tag lists define a topology of the control system, P&IDs give a graphical specification of the piping, passive process equipment and control relevant active process equipment, and control narratives give a textual description of requirements of the industrial processes. While the input / output tag lists and P&IDs are in a structural notation, and can be easily understood by the control system, the control narratives need to be interpreted and converted into control logic diagrams that can be provided as input to the control systems.

The control narratives usually consist of a textual description of the control logic philosophy and may contain tables, images or a combination thereof. Currently, an automation engineer is required to understand, interpret and convert the requirements of the industrial processes provided within the control narratives, into domain-specific languages / control diagrams (e.g., IEC-61131-3 or IEC 61499 notations).

Engineers are assumed to have the competence to define control logic in a domain-specific language. However, interpreting requirements in control narratives is subjective for example due to differences in the way control narratives may be written (e.g. different expression (in words/images) of the same narrative by different personnel). Further, converting them to control logic is time consuming and prone to error due to misinterpretation of the requirements.

Patent application US 2017/293276 A1 discloses a system and method to perform a configuration or reconfiguration of applications run by an automation system, the configuration system including a processing unit adapted to process at least one natural language statement of a user requirement input by a user concerning a control and/or monitoring functionality of the automation system based on a user ontology of the user and/or an automation system ontology of the automation system to generate a formal requirements specification, and a matching unit adapted to match the generated formal requirements specification and formal component specifications read from a component library to derive a configuration deployment including one or several suitable components with configurations fulfilling the input user requirement.

Patent application US 2016/314106 A1 discloses an apparatus that automatically detects natural language processing (NLP) system annotation errors and correspondingly updates NLP annotators to prevent future erroneous annotations

In view of the above, there is a need for a method and a system that can automatically extract the control logic from the control narrative and provide the control logic / control program to the control system for performing the industrial process.

### SUMMARY

In line with the invention a method is provided according to the wording of claim 1. A corresponding apparatus is provided according to the wording of claim 2.

### BRIEF DESCRIPTION OF DRAWINGS

FIG. 1 is a simplified view of an environment in which various embodiments of the present invention can be practiced.
FIG. 2A - 2B are example illustrations of relationships identified between control entities of an example control narrative, according to an embodiment of the present invention.
FIG. 3 is a flowchart of a method for performing an industrial process, according to an embodiment of the present invention.
FIG. 4A-4B is a flow diagram for converting a control narrative into a control logic used for performing an industrial process with a controller of a process plant, according to an embodiment of the present invention.

### DETAILED DESCRIPTION

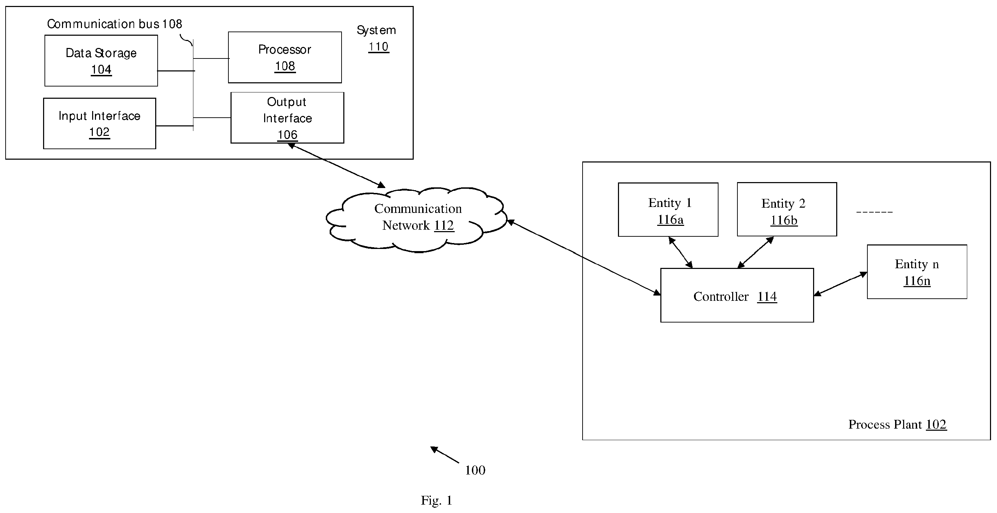

The present invention is related to generating a control logic required for performing an industrial process with a controller of a process plant. Various embodiments of the present invention can be practiced in an environment such as environment 100 shown in FIG. 1. The environment 100 shown in FIG. 1 shows a process plant (102) where a controller (114) is connected to a plurality of entities / process elements (116a-n) for performing an industrial process. For example, in a pulp and paper process plant, a controller ( or a distributed control system) may control operations of plurality of entities such as a motor, a conveyor belt, and a plurality of control valves that facilitate movement of the pulp along conduits during the process of manufacturing paper.

The controller is also in communication with a system (110) over a communication network (112). According to the invention, the system generates a control logic for the controller for performing the industrial process. The control logic is communicated in a machine-readable form (e.g., XML format) to the controller over the communication network. Though the environment shows a single controller receiving the control logic for a particular industrial process from the system, it is understood that multiple controllers operating within a single process plant can receive control logic associated with multiple industrial processes from a single system or multiple systems. The multiple systems can communicate over a single or multiple communication networks (e.g. control network, plant network, internet etc.).

In an example useful to understand the invention, the system includes a computing device (e.g. a server) capable of communicating over a cloud network. As shown, the system includes a plurality of modules such as an input unit (102), a processor (108), a communication unit (106) and a data storage (104). The plurality of modules can communicate with each other via a communication bus 108. The communication bus can be dedicated interfaces (e.g. wired lines or suitable I/Os) that connect the plurality of modules.

The input unit can be a human machine interface that receives a control narrative associated with the industrial process from a user. The control narrative can include one or more control requirements of the industrial process in a human readable format. The control narrative provides a textual description of the logic required to control and monitor the operations of the process plant. In an example, where the process plant is a pulp and paper process plant that manufactures paper, a control narrative can be provided for a controller that performs multiple actions as a part of the process of manufacturing paper.

The processor can include a single processor or multiple processors that operate in parallel. According to the invention, the processor can parse the control narrative to obtain a plurality of expressions. The processor can extract a plurality of control entities and a plurality of set points from the plurality of expressions using one or more sets of predetermined regular expressions and one or more models used for identifying named entities (e.g. custom entity recognition models) in the control narrative.

The regular expressions are already identified for example provided by an expert, or read from domain specific databases etc. The custom entities are defined using the system, by an operator to denote / annotate other objects (e.g. control entities). Thus, the custom entities provided as input help in training of the model (e.g. based on NLP or machine learning) to identify objects (control entities, set points etc.) in addition to the objects being identified using the regular expressions (e.g. defined by experts). Accordingly, there are two separate channels for identifying objects - one using regular expressions and one using the models. The output of both are combined to arrive at the final set of objects.

According to the invention, the processor extracts a plurality of control entities from the plurality of expressions based on a first set of predetermined regular expressions (Tagged regular expressions created using expert knowledge or domain database) and a first model. The first set of predetermined regular expressions identify control entities as defined using known data of control entities. For example, these can be control entities defined by experts beforehand, identified from domain databases / rules etc.

The first model comprises a mapping between a set of annotations associated with control entities, where an annotation of a control entity is based on a domain of the industrial process. Such annotation is created (during training of the model) by an expert to indicate control entity. The processor can build the first model from a set of documents (training set) comprising a set of annotations associated with a set of control entities. The training set is developed by subject matter experts who provide the set of annotations based on domain knowledge. Upon receiving the training set, the processor can apply natural language processing (NLP) based Deep Learning techniques such as, but not limited to, Conditional Random Fields or Recurrent Neural Networks on the training set to train and develop the first model.

According to the invention, the processor extracts a plurality of set points from the plurality of expressions based on a second set of predetermined regular expressions (Tagged regular expressions) and a second model. Each set point of the plurality of set points is associated with a control entity of the plurality of control entities. The second set of predetermined regular expressions identifies set points that are known beforehand for example defined by experts, from domain databases etc. The second model comprises a mapping between a set of annotations associated with the set of set points, where an annotation of a set point is based on a domain of the industrial process. Such annotation can be provide by experts for training. The processor can build the second model from a set of documents (training set) comprising a set of annotations associated with a set of set points. The training set is developed by subject matter experts who provide the set of annotations based on domain knowledge. Upon receiving the training set, the processor can apply natural language processing (NLP) based Deep Learning techniques such as, but not limited to, Conditional Random Fields or Recurrent Neural Networks on the training set to train and develop the second model.

It is mentioned above that there are separate models for identifying control entities and set points, where each model is built using regular expressions and machine learning or NLP. However, it should be noted that there can be one unified model created to identify both control entities and set points. Thus, the combination of regular expressions with custom entity recognition is used to identify objects such as control entities and set points.

Continuing with the above description, consider an example where a control narrative may contain text such as *"Sea water is to be filtered and stored in a filtration tank where the temperature needs to be below 21 degree* C ..." In this example, a set point 21 degree C is identified using the regular expression for degree C (a unit for measuring temperature). Further, the set point is also identified using on a machine learning model that may be trained on a number of training examples containing temperature entities as set points.

In an embodiment, the first model and the second model is a Custom Named Entity Recognition (CER) algorithm that labels the control narrative and is used in combination with the first set of predetermined regular expressions and second set of predetermined expressions (Tag Regular Expressions) to maximize the detection of control entities and set points. The first and second predetermined set of expressions and the first and second model is retrieved from the data storage 104, communicatively coupled to the system. Extraction of control entities can be explained in reference to a control narrative shown in Illustration 1, given below:

| |
|---|
| The pressure controller, PIC-0152, controls the pressure of a production header, by operating the pressure control valve, PV-0152. The pressure controller, PIC-0146, controls the pressure of the production-header-A, by operating the pressure control valve, PV-0146. |
| To maintain the differential pressure across the production headers, the manual set point in the pressure controller PIC-0152 is greater than in the pressure controller PIC-0146. |
| The flow control, FIC-0555, manipulates the flow of the blending line through the control valve, FV-0555. The operator sets the set point for this flow controller. |
| The pressure differential controller, PDIC-0555, seeks to maintain the pressure over the blending line. The set point for the pressure differential controller, PDIC-0555, is calculated in the block, PY-0555B, which calculates the difference of set points of pressure controllers, PIC-0152 and PIC-0146. The process variable for PDIC-0555 is calculated in the block, PY-0555A, which calculates the differential pressure over the blending line by subtracting the process variables of PIC-0152 and PIC-0146. |
| To prevent increasing the flow when the differential pressure decrease, the low signal selector, FY-0555, selects the output signal from the pressure differential controller, PDIC-0555, by closing the control valve FV-0555. |

### Illustration 1

In the control narrative of Illustration 1 shown above, the plurality of control entities found based on a first set of predetermined expressions, and a first model associated with control entities are PIC-0152, PV-0152, PIC-0146, PV-0146, FIC-0555, FV-0555, PDIC-0555, PY-0555A, PY-0555B, and FY-0555, where PIC-0152, and PIC-0146 are annotation of a pressure controller, PV-0152, PV-0146, are annotations to pressure control valves, FIC-0555 is an annotation for a flow control, FV-0555 is an annotation for a control valve, FY-0555 is an annotation for a low signal selector, PDIC-0555 is an annotation for a pressure differential controller, and PY-0555A and PY-0555B are annotations of blocks were difference in set points of pressure controllers are calculated. Aforesaid annotations can be defined in the first model by a subject matter expert.

In the example, a set point associated with the pressure controlled by pressure controller PIC-0146 (a control entity in this example) can be 15 Pascal (not shown in the Illustration herein), at which the pressure controller PIC-0146 operated the production header A by operating the pressure control valve PV-0152. The set point associated with the pressure value can be extracted using a second set of predetermined expressions related to set points, and a second model associated with set points.

Upon extracting the plurality of control entities present in the control narrative, the processor identifies a type or category for each control entity using a database of control entities. In an embodiment, the database of control entities identifies a plurality of types of control entities associated with a plurality of industrial processes. For example, ISA (The International Society of Automation) nomenclature can be used to identify a specific type of the each control entity. For example, in the control entities identified in the *Illustration 1,* can be categorized into different categories or types (e.g. controllers, valves and other entities) using the ISA as shown in *Table 1* below:

**Table 1**

| **Controllers** | **Valves** | **Other Entities** |
|---|---|---|
| PIC-0152 | PV-0152 | PY-0555A |
| PIC-0146 | PV-0146 | PY-0555B |
| FIC-0555 | FV-0555 | FY-0555 |
| PDIC-0555 | | |

Further, the processor is configured to identify a set of inputs, outputs and control elements from the plurality of control entities using a domain dictionary, where the domain dictionary identifies inputs, outputs and control elements for a predetermined industry. In an embodiment, a Domain Defined Dictionary (DDD), defines the nomenclature for control entities applicable to a particular industry. For example, an excerpt of a sample domain-driven dictionary for an Oil & Gas project is illustrated in Table 2 as below:

**Table 2**

| **Control Entity** | **Category of control entity** |
|---|---|
| Pressure Transmitter | Input |
| Level Transmitter | Input |
| Valve | Output |
| Pressure Controller | Control element |

Further based on the type of each control entity as identified from the standard nomenclature (e.g. ISA) and a category of each control entity identified from the domain dictionary, the plurality of control entities can be classified as inputs, outputs or other control entities. An example of classification of the control entities using Table 1 and Table 2, is shown in Table 3 below:

**Table 3**

| **Identified Inputs** | **Identified Outputs** |
|---|---|
| PT-0152 | PV-0152 |
| PT-0146 | PV-0146 |
| FT-0555 | FV-0555 |

The processor is configured to detect a plurality of actions from the control narrative using an intent classifier, wherein the intent classifier identifies actions using keywords and lexicons of the keywords. For example, an intent classifier and a set of synonyms for each keyword, may be used to identify the plurality of actions present in the control narrative. For example, in the last paragraph of the Illustration 1, which states *"... increasing the flow when the differential pressure decrease, the low signal selector, FY-0555, selects the output signal from the pressure differential controller, PDIC-0555, by closing the control valve FV-0555* ", 'increasing the flow' is mapped to an action associated with 'decreasing the pressure and closing the control valve'.

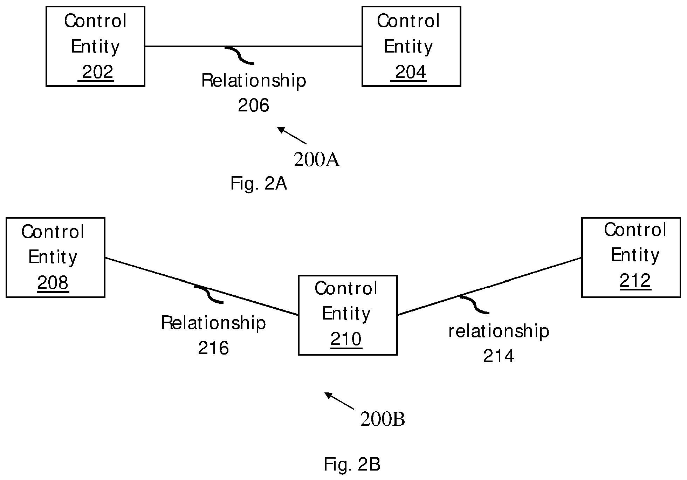

Further, the processor identifies a relationship between the set of inputs, outputs and control elements, the plurality of set points, and the plurality of actions. Identifying the relationship can include identifying relationship between the various identified objects (control entities), as well across different control blocks or elements. In an embodiment, inputs, outputs, set points and actions are mapped to control entities, and connections between control entities are identified using Co reference resolution or dependency parsing. In the illustration 1, by applying coreference resolution to the sentence *"as pressure controller, PIC-0152, controls the pressure of a production header, by operating the pressure control valve PV-0152",* a relationship between PIC-0152 to PV-0152 is identified as shown in FIG. 2A.

FIG. 2A is an example illustration 200A, of a relationship identified between control entity 204 (e.g. PV-0152) and control entity 202 (e.g. PIC-0152). By applying reference resolution, control entity 204 is identified as an output via relationship 206, to the control entity 202 (e.g. PIC-0152). Similarly, relationships between other entities of the control narrative of *Illustration* 1, can be identified as shown in FIG. 2B.

FIG. 2B illustrates a relationship 400B identified between control entity 208 (e.g. FIC-0555), control entity 210 (e.g. FV-0555) and control entity 212 (PDIC-0555). Entity 210 (FV-0555) is identified as an output 216 to entity 208 (FIC-0555), and the entity 212 (PDIC-0555) is identified as an output 214 to the entity 210.

Upon identifying the relationships between the set of inputs, outputs and control elements, the one or more set points and the one or more actions, the processor generates the control logic for the controller to perform the process. In an example useful to understand the invention, the processor generates a plurality of control logic blocks based on the relationship identified. Further the processor, maps each control logic block to a control library module existing in a library of modules, based on a semantic similarity score. For example, a control logic block is mapped to a control library module, if a semantic similarity score obtained by comparing semantics of the control logic block and the control library module is greater than predefined threshold.

Accordingly, the processor generates a plurality of control library modules from the plurality of control logic blocks. The processor generates the control logic in a machine-readable format (e.g. eXtensible Markup language (XML format)) from the plurality of control library modules. In an example, a control builder tool including a plurality of reusable control libraries is used with the processor to generate the control logic for the controller (e.g. AC 800M controller).

In an example, once the control blocks are mapped to control library modules and the set of inputs, outputs, and control elements are connected, an XML file is created to generate the corresponding control logic in a platform neutral notation. *Illustration* 2 below, shows an example XML schema representing a generated control logic.

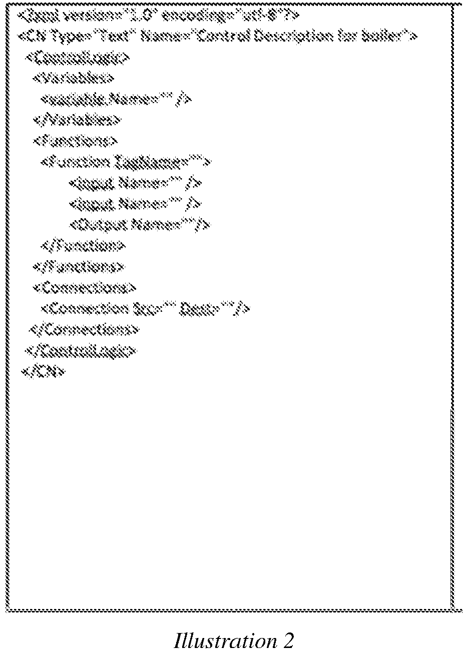

Further, *Illustration 3,* shows a generated XML file for the example control narrative depicted in Illustration 1 above.

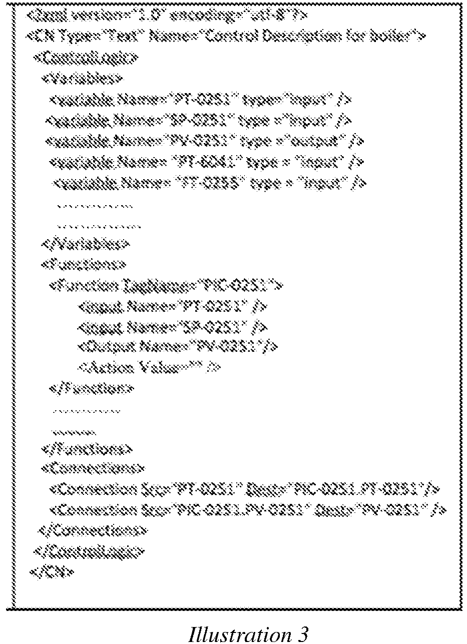

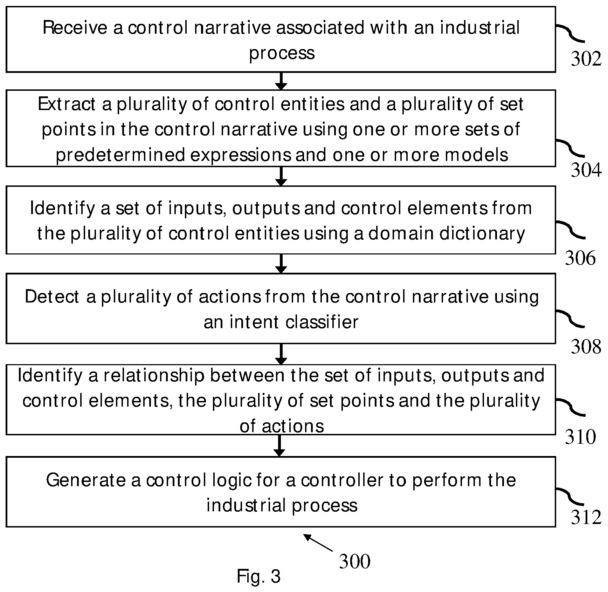

Further, the output interface communicates the control logic in the machine-readable format to the controller over a communication network for performing the process. The controller executes the control logic, to perform the industrial process associated with the control narrative received by the system 110. A method of generating the control logic is explained further in reference to FIG. 3.

FIG. 3 is a flowchart 300 illustrating a method for generating control logic for performing an industrial process with a controller in a process plant, according to the present invention.

At 302, a control narrative written in a human readable format is received by a system communicatively coupled to the controller. The control narrative includes one or more control requirements of the industrial process to be performed by the controller.

At 304, a plurality of control entities and a plurality of set points are extracted from the control narrative using one or more sets of predetermined regular expressions and one or more models for identifying named entities in the control narrative. Each set point of the plurality of set points is associated with a control entity of the plurality of control entities.

According to the invention, the control narrative is parsed to obtain a plurality of expressions. Further, a control entity is extracted from the plurality of expressions based on a first set of predetermined regular expressions and a first model. The first set of predetermined regular expressions comprises a mapping between a set of control entities to a set of regular expressions, and the first model comprises a mapping between a set of annotations associated with the set of control entities to the set of regular expressions. An annotation of a control entity is based on a domain of the industrial process.

Further, according to the invention, a set point is extracted from the plurality of expressions based on a second set of predetermined regular expressions and a second model. The second set of predetermined regular expressions comprises a mapping between a set of set points to another set of regular expressions, and the second model comprises a mapping between a set of annotations associated with the set of set points to the another set of regular expressions. An annotation of a set point is based on a domain of the industrial process.

In another example useful to understand the invention, a combined set of predetermined regular expressions and a single model is used to extract the plurality of control entities and the plurality of set points. The combined set of predetermined regular expressions comprises a mapping between a set of control entities and a set of set points to a set of regular expressions, where a regular expression associated with a control entity is distinct from a regular expression associated with a set point. Further, the combined model comprises a mapping between a set of annotations associated with the set of control entities and set of set points to the set of regular expressions. Accordingly, an annotation of a control entity being distinct from an annotation of a set point.

Further, a type for each control entity of the plurality of control entities is identified using a database of control entities. In example useful to understand the invention, the database of control entities identifies a plurality of types of control entities associated with a plurality of industrial processes.

At 306, a set of inputs, outputs and control elements are identified from the plurality of control entities using a domain dictionary, where the domain dictionary identifies inputs, outputs and control elements for a predetermined industry.

At 308, a plurality of actions is detected from the control narrative using an intent classifier. In an example useful to understand the invention, an anomaly is detected within the plurality of actions based on a set of rules associated with a domain of the industrial process. Examples of anomalous or ambiguous actions include false positives for actions, a reverse action (an action not identified in terms of control engineering) and the like.

An example of the set of rules includes Domain-defined Rules (DDR) built using the knowledge of the domain experts. For example, a rule may state, *"A low signal selector has at least two inputs".* Hence if the low signal selector is detected to provide only one input, then based on the rule, an anomaly is detected. Example of another rule is *"All variables use same tag numbers as of the controller".*

Further, though tags and relationships are identified from the control narrative, there is a chance of some information missing in the control narrative regarding the set of inputs, and outputs or the relations between the identified control narratives. The missing information may be detected using expert input and a natural language processing (NLP) based algorithm built on domain knowledge.

Further, the relationship is updated based one or more of a missing information and a correct information associated with the anomaly.

At 310, a relationship is identified between the set of inputs, outputs and control elements, the plurality of set points, and the plurality of actions. This step involves mapping of the set of inputs, outputs, control elements, the plurality of set points and the plurality of actions to control entities and identifying connections between control entities. In an example useful to understand the invention, this mapping is determined using Co-Reference resolution/dependency parsing.

At 312, the control logic is generated for the controller to perform the process, wherein the control logic is based on the relationship identified between the set of inputs, outputs and control elements, the one or more set points and the one or more actions. According to the invention, the set of inputs, outputs and control elements, the plurality of set points and the plurality of actions are mapped to the plurality of control entities. Further, a relationship between the plurality of control entities is identified based on the mapping derived between the set of inputs and outputs for the each control entity, the plurality of set points and the plurality of actions. Further, one or more control logic blocks is generated based on the relationship identified between the plurality of control entities, the plurality of set points and the plurality of actions. Further, each control logic block is mapped to a control library module existing in a library of modules of a control builder tool and the control logic is generated in a machine-readable format from one or more control library modules, where the one or more control library modules is mapped to the one or more control logic blocks.

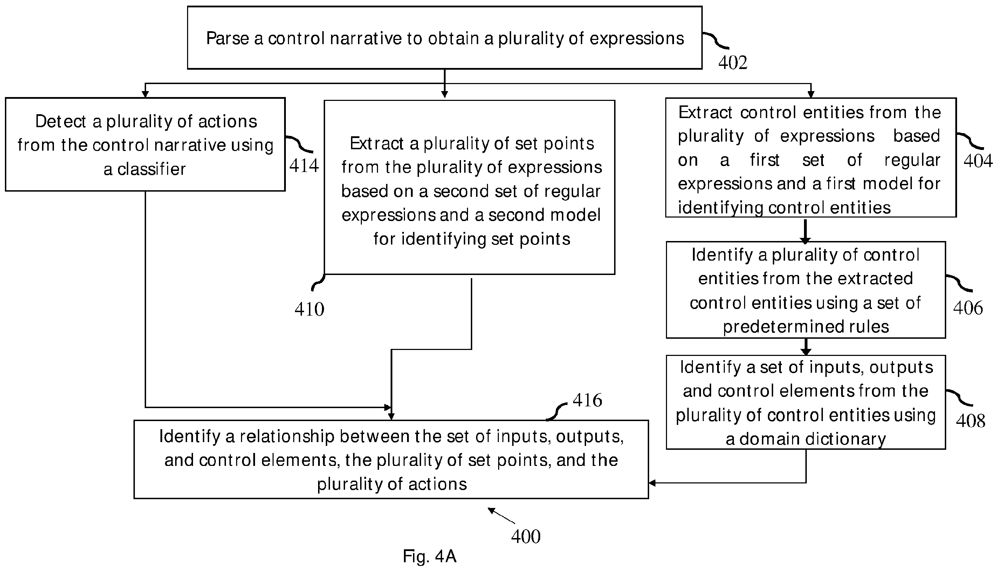

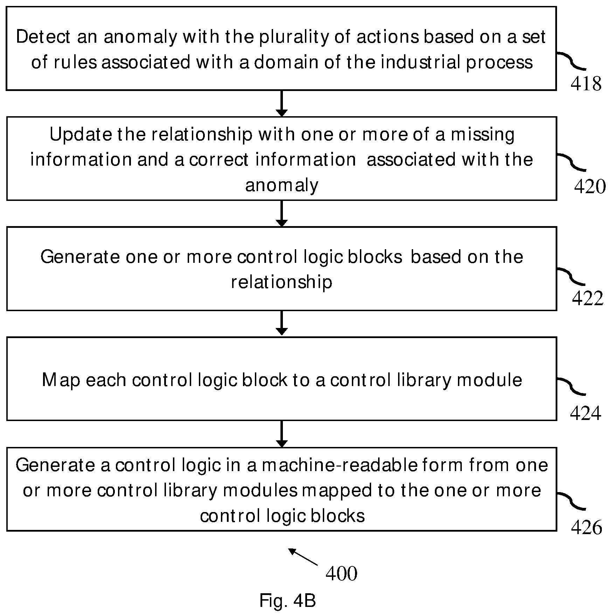

Another example of the method of generating the control logic from a control narrative is explained in reference to FIG. 4A-4B.

FIG. 4A-4B is a flowchart 400 that illustrates a method for generating a control logic from a control narrative, in accordance with an example useful to understand the invention.

At 402, the control narrative is parsed to obtain a plurality of expressions.

At 404, control entities are extracted from the plurality of expressions based on a first set of predetermined regular expressions and a first model (e.g. NLP based model) for identifying control entities. At 406, a plurality of control entities are identified from the extracted control entities using a set of predetermined rules. For example, rules from a standard (e.g. for industrial automation). At 408, a set of inputs, outputs and control elements are identified from the plurality of control entities using a domain defined dictionary.

At 410, a plurality of set points are extracted from the plurality of expressions based on a second set of predetermined regular expressions and a second model for identifying set points.

At 414, a plurality of actions is detected from the control narrative using a classifier (e.g. intent classifier). Upon detecting the set of inputs, outputs, and control elements, the plurality of set points, and the plurality of actions, the method flows to step 416.

At 416, a relationship is identified between the set of inputs, outputs, and control elements, the plurality of set points, and the plurality of actions. This involves identifying control blocks and relations between control blocks as well.

At 418, an anomaly is detected with the plurality of actions based on a set of rules (domain defined rules) associated with a domain of the industrial process.

At 420, the relationship is updated with one or more of a missing information and a correct information associated with the anomaly.

At 422, one or more control logic blocks is generated based on the relationship.

At 424, each control logic block is mapped to a control library module.

At 426, control logic is generated in a machine-readable form from one or more control library modules mapped to the one or more control logic blocks.

Disclosed method and system provides an efficient means to automatically derive control logic from a control narrative associated with an industrial process. The derived control logic is free from ambiguities and facilitates performance of the industrial process in a reliable manner. Further disclosed method is fast and saves time in execution of the industrial process. Further, the generated control logic is in a platform neutral format, which facilitates execution of the control logic on various types and configurations of control systems/ controllers.

## Claims

1. A method for generating a control logic for performing an industrial process with a controller in a process plant, the method comprising:
receiving a control narrative (302) associated with the process, wherein the control narrative comprises one or more control requirements of the industrial process;
extracting (304) a plurality of control entities and a plurality of set points, from the control narrative using one or more sets of predetermined regular expressions and one or more models for identifying named entities in the control narrative, wherein each set point of the plurality of set points is associated with a control entity of the plurality of control entities;
identifying a set of inputs, outputs and control elements (306) from the plurality of control entities using a domain dictionary, wherein the domain dictionary identifies inputs, outputs and control elements for a predetermined industry;
detecting a plurality of actions (308) from the control narrative using an intent classifier, wherein the intent classifier identifies actions using keywords and lexicons of the keywords;
identifying a relationship (310) between the set of inputs, outputs and control elements, the plurality of set points, and the plurality of actions; and
generating the control logic (312) for the controller to perform the process, wherein the control logic is based on the relationship identified between the set of inputs, outputs and control elements, the one or more set points and the one or more actions;
wherein extracting the plurality of control entities and the plurality of set points further comprises:
parsing the control narrative to obtain a plurality of expressions;
extracting a control entity from the plurality of expressions based on a first set of predetermined regular expressions and a first model, wherein the first set of predetermined regular expressions comprises a mapping between a set of control entities to a set of regular expressions, wherein the first model comprises a mapping between a set of annotations associated with the set of control entities to the set of regular expressions, wherein an annotation of a control entity is based on a domain of the industrial process; and
extracting a set point from the plurality of expressions based on a second set of predetermined regular expressions and a second model, wherein the second set of predetermined regular expressions comprises a mapping between a set of set points to another set of regular expressions, wherein the second model comprises a mapping between a set of annotations associated with the set of set points to the another set of regular expressions, wherein an annotation of a set point is based on a domain of the industrial process.

2. A system for generating a control logic for performing a process with a controller of a process plant, wherein the system is communicatively coupled to the controller, the system comprising:
an input interface configured to:
receive a control narrative associated with the industrial processes, wherein the control narrative comprises one or more control requirements of the industrial process; and
a processor configured to:
extract a plurality of control entities and a plurality of set points from the control narrative using one or more sets of predetermined regular expressions and one or more models for identifying named entities in the control narrative, wherein each set point of the plurality of set points is associated with a control entity of the plurality of control entities;
detect a plurality of actions from the control narrative using an intent classifier, wherein the intent classifier identifies actions using keywords and lexicons of the keywords;
identify a set of inputs, outputs and control elements from the plurality of control entities using a domain dictionary, wherein the domain dictionary identifies inputs, outputs and control elements for a predetermined industry;
identify a relationship between the set of inputs, outputs and control elements, the plurality of set points, and the plurality of actions; and generate the control logic for the controller to perform the process, wherein the control logic is based on the relationship identified between the set of inputs, outputs and control elements, the one or more set points and the one or more actions; and
an output interface configured to:
communicate the control logic to the controller over a communication network for performing the process;
wherein the processor is further configured to:
build a first model from a set of documents comprising a set of annotations associated with a set of control entities, wherein the first model comprises a mapping between the set of annotations to a set of regular expressions, wherein an annotation of a control entity is based on a domain of the industrial process; and
wherein the processor is further configured to extract the plurality of control entities and the plurality of set points further by parsing the control narrative to obtain a plurality of expressions; extracting a control entity from the plurality of expressions based on a first set of predetermined regular expressions and a first model, wherein the first set of predetermined regular expressions comprises a mapping between a set of control entities to a set of regular expressions,
build a second model associated with a set of set points, wherein the second model comprises a mapping between a set of annotations associated with the set of set points to another set of regular expressions, wherein an annotation of a set point is based on a domain of the industrial process, and
extracting a set point from the plurality of expressions based on the another set of regular expressions and the second model, wherein the second set of predetermined regular expressions comprises a mapping between a set of set points to the another set of regular expressions.

## Patentansprüche

1. Verfahren zum Erzeugen einer Steuerlogik zum Durchführen eines industriellen Prozesses mit einer Steuerung in einer Prozessanlage, wobei das Verfahren umfasst:
Empfangen eines Steuernarrativs (302), das mit dem Prozess assoziiert ist, wobei das Steuernarrativ eine oder mehrere Steueranforderung(en) des industriellen Prozesses umfasst;
Extrahieren (304) einer Vielzahl von Steuerentitäten und einer Vielzahl von Sollwerten aus dem Steuernarrativ unter Verwendung eines Satzes oder mehrerer Sätze vorbestimmter regulärer Ausdrücke und eines Modells oder mehrerer Modelle zum Identifizieren benannter Entitäten im Steuernarrativ, wobei jeder Sollwert der Vielzahl von Sollwerten mit einer Steuerentität der Vielzahl von Steuerentitäten assoziiert ist;
Identifizieren eines Satzes von Eingaben, Ausgaben und Steuerelementen (306) von der Vielzahl von Steuerentitäten unter Verwendung eines Domänenwörterbuchs, wobei das Domänenwörterbuch Eingaben, Ausgaben und Steuerelemente für eine vorbestimmte Branche identifiziert;
Detektieren einer Vielzahl von Aktionen (308) aus dem Steuernarrativ unter Verwendung eines Absichtsklassifikators, wobei der Absichtsklassifikator Aktionen unter Verwendung von Schlüsselwörtern und Lexika der Schlüsselwörter identifiziert;
Identifizieren einer Beziehung (310) zwischen dem Satz von Eingaben, Ausgaben und Steuerelementen, der Vielzahl von Sollwerten und der Vielzahl von Aktionen und;
Erzeugen der Steuerlogik (312) für die Steuerung zum Durchführen des Prozesses, wobei die Steuerlogik auf der Beziehung basiert, die zwischen dem Satz von Eingaben, Ausgaben und Steuerelementen, dem einen oder den mehreren Sollwert(en) und der einen oder den mehreren Aktion(en) identifiziert wird;
wobei das Extrahieren der Vielzahl von Steuerentitäten und der Vielzahl von Sollwerten ferner umfasst:
Parsen des Steuernarrativs, um eine Vielzahl von Ausdrücken zu erhalten;
Extrahieren einer Steuerentität aus der Vielzahl von Ausdrücken basierend auf einem ersten Satz vorbestimmter regulärer Ausdrücke und einem ersten Modell, wobei der erste Satz vorbestimmter regulärer Ausdrücke ein Abbilden zwischen einem Satz von Steuerentitäten auf einen Satz regulärer Ausdrücke umfasst, wobei das erste Modell ein Abbilden zwischen einem Satz von Anmerkungen, der mit dem Satz von Steuerentitäten assoziiert ist, auf den Satz regulärer Ausdrücke, wobei eine Anmerkung einer Steuerentität auf einer Domäne des industriellen Prozesses basiert, umfasst; und
Extrahieren eines Sollwerts aus der Vielzahl von Ausdrücken basierend auf einem zweiten Satz vorbestimmter regulärer Ausdrücke und einem zweiten Modell, wobei der zweite Satz vorbestimmter regulärer Ausdrücke ein Abbilden zwischen einem Satz von Sollwerten auf einen anderen Satz regulärer Ausdrücke umfasst, wobei das zweite Modell ein Abbilden zwischen einem Satz von Anmerkungen, der mit dem Satz von Sollwerten assoziiert ist, auf den anderen Satz regulärer Ausdrücke, wobei eine Anmerkung eines Sollwerts auf einer Domäne des industriellen Prozesses basiert, umfasst.

2. System zum Erzeugen einer Steuerlogik zum Durchführen eines Prozesses mit einer Steuerung einer Prozessanlage, wobei das System kommunikativ mit der Steuerung gekoppelt ist, wobei das System umfasst:
eine Eingabeschnittstelle, die konfiguriert ist zum:
Empfangen eines Steuernarrativs, das mit den industriellen Prozessen assoziiert ist, wobei das Steuernarrativ eine oder mehrere Steueranforderung(en) des industriellen Prozesses umfasst; und
einen Prozessor, der konfiguriert ist zum:
Extrahieren einer Vielzahl von Steuerentitäten und einer Vielzahl von Sollwerten aus dem Steuernarrativ unter Verwendung eines Satzes oder mehrerer Sätze vorbestimmter regulärer Ausdrücke und eines Modells oder mehrerer Modelle zum Identifizieren benannter Entitäten im Steuernarrativ, wobei jeder Sollwert der Vielzahl von Sollwerten mit einer Steuerentität der Vielzahl von Steuerentitäten assoziiert ist;
Detektieren einer Vielzahl von Aktionen aus dem Steuernarrativ unter Verwendung eines Absichtsklassifikators, wobei der Absichtsklassifikator Aktionen unter Verwendung von Schlüsselwörtern und Lexika der Schlüsselwörter identifiziert;
Identifizieren eines Satzes von Eingaben, Ausgaben und Steuerelementen von der Vielzahl von Steuerentitäten unter Verwendung eines Domänenwörterbuchs, wobei das Domänenwörterbuch Eingaben, Ausgaben und Steuerelemente für eine vorbestimmte Branche identifiziert;
Identifizieren einer Beziehung zwischen dem Satz von Eingaben, Ausgaben und Steuerelementen, der Vielzahl von Sollwerten und der Vielzahl von Aktionen; und
Erzeugen der Steuerlogik für die Steuerung zum Durchführen des Prozesses, wobei die Steuerlogik auf der Beziehung basiert, die zwischen dem Satz von Eingaben, Ausgaben und Steuerelementen, dem einen oder den mehreren Sollwert(en) und der einen oder den mehreren Aktion(en) identifiziert wird;
eine Ausgabeschnittstelle, die konfiguriert ist zum:
Kommunizieren der Steuerlogik an die Steuerung über ein Kommunikationsnetzwerk zum Durchführen des Prozesses;
wobei der Prozessor ferner konfiguriert ist zum:
Erstellen eines ersten Modells aus einem Satz von Dokumenten, der einen Satz von Anmerkungen umfasst, der mit einem Satz von Steuerentitäten assoziiert ist, wobei das erste Modell ein Abbilden zwischen dem Satz von Anmerkungen auf einen Satz regulärer Ausdrücke, wobei eine Anmerkung einer Steuerentität auf einer Domäne des industriellen Prozesses basiert; umfasst und
wobei der Prozessor ferner konfiguriert ist, um die Vielzahl von Steuerentitäten und die Vielzahl von Sollwerten ferner durch Parsen des Steuernarrativs zu extrahieren, um eine Vielzahl von Ausdrücken zu erhalten;
Extrahieren einer Steuerentität aus der Vielzahl von Ausdrücken basierend auf einem ersten Satz vorbestimmter regulärer Ausdrücke und einem ersten Modell, wobei der erste Satz vorbestimmter regulärer Ausdrücke ein Abbilden zwischen einem Satz von Steuerentitäten auf einen Satz regulärer Ausdrücke umfasst,
Erstellen eines zweiten Modells, das mit einem Satz von Sollwerten assoziiert ist, wobei das zweite Modell ein Abbilden zwischen einem Satz von Anmerkungen, der mit dem Satz von Sollwerten assoziiert ist, auf einen anderen Satz regulärer Ausdrücke umfasst, wobei eine Anmerkung eines Sollwerts auf einer Domäne des industriellen Prozesses basiert, und Extrahieren eines Sollwerts aus der Vielzahl von Ausdrücken basierend auf dem anderen Satz regulärer Ausdrücke und dem zweiten Modell, wobei der zweite Satz vorbestimmter regulärer Ausdrücke ein Abbilden zwischen einem Satz von Sollwerten auf den anderen Satz regulärer Ausdrücke umfasst.

## Revendications

1. Procédé pour générer une logique de commande afin de réaliser un processus industriel avec un dispositif de commande dans une installation de transformation, le procédé comprenant :
la réception d'un descriptif de commande (302) associé au processus, le descriptif de commande comprenant une ou plusieurs exigences de commande du processus industriel ;
l'extraction (304) d'une pluralité d'entités de commande et d'une pluralité de points de consigne, à partir du descriptif de commande à l'aide d'un ou de plusieurs ensembles d'expressions régulières prédéterminées et d'un ou de plusieurs modèles pour identifier des entités nommées dans le descriptif de commande, dans lequel chaque point de consigne de la pluralité de points de consigne est associé à une entité de commande de la pluralité d'entités de commande ;
l'identification d'un ensemble d'entrées, de sorties et d'éléments de commande (306) parmi la pluralité d'entités de commande à l'aide d'un dictionnaire de domaine, le dictionnaire de domaine identifiant des entrées, des sorties et des éléments de commande pour une industrie prédéterminée ;
la détection d'une pluralité d'actions (308) à partir du descriptif de commande à l'aide d'un classificateur d'intention, le classificateur d'intention identifiant des actions à l'aide de mots-clés et de lexiques des mots-clés ;
l'identification d'une relation (310) entre l'ensemble d'entrées, de sorties et d'éléments de commande, la pluralité de points de consigne, et la pluralité d'actions ; et
la génération de la logique de commande (312) pour que le dispositif de commande réalise le processus, la logique de commande étant basée sur la relation identifiée entre l'ensemble d'entrées, de sorties et d'éléments de commande, les un ou plusieurs points de consigne et les une ou plusieurs actions ;
dans lequel l'extraction de la pluralité d'entités de commande et de la pluralité de points de consigne comprend en outre :
l'analyse du descriptif de commande pour obtenir une pluralité d'expressions ;
l'extraction d'une entité de commande à partir de la pluralité d'expressions sur la base d'un premier ensemble d'expressions régulières prédéterminées et d'un premier modèle, dans lequel le premier ensemble d'expressions régulières prédéterminées comprend un mappage entre un ensemble d'entités de commande sur un ensemble d'expressions régulières, dans lequel le premier modèle comprend un mappage entre un ensemble d'annotations associées à l'ensemble d'entités de commande sur l'ensemble d'expressions régulières, dans lequel une annotation d'une entité de commande est basée sur un domaine du processus industriel ; et
l'extraction d'un point de consigne à partir de la pluralité d'expressions sur la base d'un second ensemble d'expressions régulières prédéterminées et d'un second modèle, dans lequel le second ensemble d'expressions régulières prédéterminées comprend une mappage entre un ensemble de points de consigne sur un autre ensemble d'expressions régulières, dans lequel le second modèle comprend un mappage entre un ensemble d'annotations associées à l'ensemble de points de consigne sur l'autre ensemble d'expressions régulières, dans lequel une annotation d'un point de consigne est basée sur un domaine du processus industriel.

2. Système de génération d'une logique de commande pour réaliser un processus avec un dispositif de commande d'une installation de transformation, le système étant couplé de manière communicative au dispositif de commande, le système comprenant :
une interface d'entrée configurée pour :
recevoir un descriptif de commande associé aux processus industriels, le descriptif de commande comprenant une ou plusieurs exigences de commande du processus industriel ; et
un processeur configuré pour :
extraire une pluralité d'entités de commande et une pluralité de points de consigne à partir du descriptif de commande à l'aide d'un ou de plusieurs ensembles d'expressions régulières prédéterminées et d'un ou de plusieurs modèles pour identifier des entités nommées dans le descriptif de commande, dans lequel chaque point de consigne de la pluralité de points de consigne est associé à une entité de commande de la pluralité d'entités de commande ;
détecter une pluralité d'actions à partir du descriptif de commande à l'aide d'un classificateur d'intention, le classificateur d'intention identifiant des actions à l'aide de mots-clés et de lexiques des mots-clés ;
identifier un ensemble d'entrées, de sorties et d'éléments de commande parmi la pluralité d'entités de commande à l'aide d'un dictionnaire de domaine, le dictionnaire de domaine identifiant des entrées, des sorties et des éléments de commande pour une industrie prédéterminée ;
identifier une relation entre l'ensemble d'entrées, de sorties et d'éléments de commande, la pluralité de points de consigne, et la pluralité d'actions ; et
générer la logique de commande pour que le dispositif de commande réalise le processus, la logique de commande étant basée sur la relation identifiée entre l'ensemble d'entrées, de sorties et d'éléments de commande, les un ou plusieurs points de consigne et les une ou plusieurs actions ; et
une interface de sortie configurée pour :
communiquer la logique de commande au dispositif de commande sur un réseau de communication pour réaliser le processus ;
dans lequel le processeur est en outre configuré pour :
construire un premier modèle à partir d'un ensemble de documents comprenant un ensemble d'annotations associé à un ensemble d'entités de commande, dans lequel le premier modèle comprend un mappage entre l'ensemble d'annotations et un ensemble d'expressions régulières, dans lequel une annotation d'une entité de commande est basée sur un domaine du processus industriel ; et dans lequel le processeur est en outre configuré pour extraire en outre la pluralité d'entités de commande et la pluralité de points de consigne par analyse du descriptif de commande pour obtenir une pluralité d'expressions ; extraire une entité de commande à partir de la pluralité d'expressions sur la base d'un premier ensemble d'expressions régulières prédéterminées et d'un premier modèle, dans lequel le premier ensemble d'expressions régulières prédéterminées comprend un mappage entre un ensemble d'entités de commande sur un ensemble d'expressions régulières,
construire un second modèle associé à un ensemble de points de consigne, dans lequel le second modèle comprend un mappage entre un ensemble d'annotations associées à l'ensemble de points de consigne sur un autre ensemble d'expressions régulières, dans lequel une annotation d'un point de consigne est basée sur un domaine du processus industriel, et l'extraction d'un point de consigne à partir de la pluralité d'expressions sur la base de l'autre ensemble d'expressions régulières et du second modèle, dans lequel le second ensemble d'expressions régulières prédéterminées comprend un mappage entre un ensemble de points de consigne et l'autre ensemble d'expressions régulières.
